# EUROPÄISCHE PATENTSCHRIFT

(11) **EP 1 677 035 B1**
(45) Veröffentlichungstag und Bekanntmachung des Hinweises auf die Patenterteilung: **23.06.2010**
(21) Anmeldenummer: 05027263.2
(22) Anmeldetag: 14.12.2005
(51) Int. Cl.: F16K 11/078

(54) **Mischerkartusche**
Mixing cartridge
Cartouche mélangeur

(30) Priorität: 04.01.2005 DE 102005001300
(43) Veröffentlichungstag der Anmeldung: 05.07.2006
(73) Patentinhaber: Hansgrohe AG, 77761 Schiltach (DE)
(72) Erfinder: Ginter, Andreas, 78713 Schramberg-Heiligenbronn (DE); Blattner, Joachim, 77716 Haslach (DE); King, Jürgen, 78730 Lauterbach (DE)
(74) Vertreter: Schöndorf, Jürgen

(56) Entgegenhaltungen:
- WO-A-01/77556
- DE-A- 4 238 671
- DE-A1- 4 038 474
- US-A- 6 019 132
- US-B1- 6 363 969

## Beschreibung

Die Erfindung betrifft eine Mischerkartusche wie sie beispielsweise aus US-B-6 363 969 oder aus DE-A-4 238 671 bekannt ist.

In Sanitärarmaturen werden häufig Mischerkartuschen eingesetzt, die eine vollständige Mischersteuerung meistens mit Hilfe von keramischen Steuerscheiben enthalten. Die Verwendung von Mischerkartuschen hat den Vorteil, dass austauschbare Mischerelemente mit unterschiedlich gestalteten Armaturengehäusen verwendet werden können.

Da bei den Armaturengehäusen häufig der Wunsch nach möglichst kleinem Aufbau gegeben ist, werden auch die Mischerkartuschen immer kleiner. Andererseits wird die Benutzung von Sanitärarmaturen durch den Benutzer nicht geändert, sondern die Armaturen werden ohne Rücksicht auf ihre Größe behandelt. Dadurch entsteht die Forderung, dass auch Mischerkartuschen eine unachtsame Behandlung aushalten können sollen.

Der Erfindung liegt die Aufgabe zu Grunde, eine Mischerkartusche zu schaffen, die einer unachtsamen Behandlung besser widersteht.
Zur Lösung dieser Aufgabe schlägt die Erfindung eine Mischerkartusche mit den im Anspruch 1 genannten Merkmalen vor. Eine Weiterbildung der Erfindung ist Gegenstand von Anspruch 2.

Die Mischerkartuschen werden mit Betätigungselementen betätigt, an denen ein Griff befestigt ist. Dieser Griff hat zum Teil seinerseits noch einen Hebel, so dass bei der zum Öffnen und Schließen üblichen Schwenkbewegung große Kräfte auf die Mischerkartusche ausgeübt werden können. Gerade beim Schließen eines Ventils werden häufig große Kräfte auf das Mischersystem ausgeübt, da das Schließen des Ventils in der Regel schnell geschieht. Es besteht daher die Gefahr, dass bei den immer kleiner werdenden Mischerkartuschen eine Undichtigkeit auftritt, wenn ständig ruckartige Bewegungen auf die Innenseite des Kartuschengehäuses ausgeübt werden. Durch die Anbringung eines zweiten Anschlags, der am Betätigungselement zum Angriff ausgebildet ist, werden diese Kräfte besser abgefangen.

Üblicherweise ist der Betätigungsschaft, der in der Mischerkartusche gelagert ist, als zweiarmiger Hebel ausgebildet. Die Lagerung geschieht beispielsweise in einer Art Kugelkalotte, wobei der in das Innere der Kartusche hinein ragende Arm mit der Steuerscheibe der Scheibensteuerung in Wirkverbindung steht, während an dem aus der Kartusche herausragenden Arm der Armaturengriff angebracht wird. Der Anschlag zum Angreifen an dem Betätigungselement kann beispielsweise innerhalb der Kartusche an dem nach innen gerichteten Hebelarm angreifen. Besonders günstig ist es jedoch, wenn der Anschlag zum Angriff an dem der Steuerscheibe abgewandten Hebelarm des Betätigungselements ausgebildet ist.

Die bewegbare Steuerscheibe ist üblicherweise als beispielsweise kreisrunde Scheibe ausgebildet. Dies ergibt sich daraus, dass sie nicht nur verschoben, sondern auch verdreht wird. Die Erfindung schlägt nun in Weiterbildung vor, dass der Anschlag für die Steuerscheibe an einer die Steuerscheibe umgebenden Kontur des Kartuschengehäuses ausgebildet ist, wobei insbesondere die Kontur so gestaltet ist, dass sie den maximal möglichen Bewegungsweg der Steuerscheibe einschließt. Es wird auf diese Weise möglich, einen Anschlag nicht nur für den Vorgang des Schließens des Ventils zu bilden, sondern auch für alle anderen Zustände des Ventils, insbesondere auch den Öffnungsvorgang.

Um die Stabilität der Mischerkartusche weiter zu verbessern, ist vorgesehen, dass der Anschlag für das Betätigungselement an einer den maximal möglichen Bewegungsweg des Betätigungselements umgebenden Kontur des Kartuschengehäuses ausgebildet ist, wobei auch hier diese Kontur so gestaltet wird, dass ein Anschlag in allen möglichen Stellungen gegeben sein kann.

Insbesondere ist vorgesehen, dass die Kontur für das Betätigungselement spiegelbildlich verkleinert zu der Kontur für die Steuerscheibe ausgebildet ist.

Weitere Merkmale, Einzelheiten und Vorzüge der Erfindung ergeben sich aus den Ansprüchen , deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: einen Längsschnitt durch eine Mischerkartusche in offenem Zustand der Kartusche;
- Figur 2: eine der Figur 1 entsprechende Darstellung bei geschlossenem Zustand der Kartusche;
- Figur 3: einen Schnitt durch das Betätigungselement mit der schematischen Darstellung der Position der Steuerscheibe in der Position der Figur 1;
- Figur 4: einen der Figur 3 entsprechenden Schnitt durch die Mischerkartusche in der Position der Figur 2.

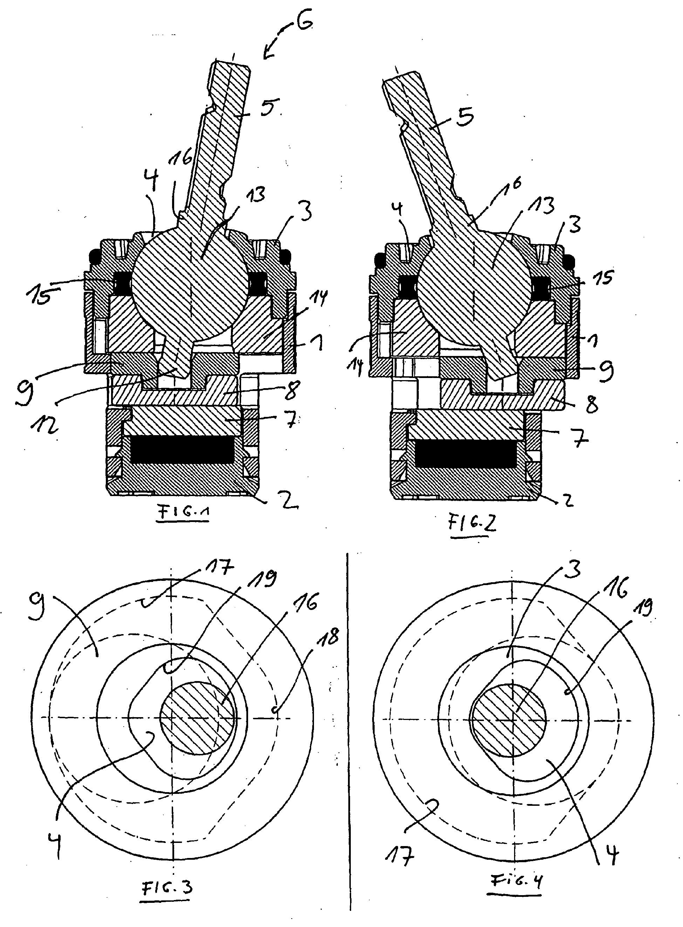

Zunächst wird unter Bezugnahme auf Figur 1 der Aufbau der dargestellten Mischerkartusche beschrieben. Die Mischerkartusche enthält ein Gehäuse 1, das zum Einsetzen in eine Sanitärarmatur ausgebildet ist und einen Kartuschenboden 2 aufweist. Auf der dem Kartuschenboden 2 abgewandten Seite ist ein Kartuschendeckel 3 in dem Gehäuse 1 befestigt, der eine Austrittsöffnung 4 für einen Schaft 5 eines Betätigungselements 6 enthält.

In dem Kartuschengehäuse 1 ist eine feststehende Steuerscheibe 7, auch Verteilerscheibe genannt, angeordnet, der gegenüber eine bewegbare Steuerscheibe 8 verschoben und verdreht werden kann. Zum Verschieben der Steuerscheibe 8 ist eine Halterungsscheibe 9 vorgesehen, die mit einem Ansatz 10 in eine entsprechend geformte Ausnehmung in der Steuerscheibe 8 eingreift. Die Halterungsscheibe 9 enthält eine Öffnung 11, in die ein Ende 12 des bereits erwähnten Betätigungselements 6 eingreift.

Das Betätigungselement weist in seinem mittleren Bereich eine Kugel 13 auf, die innerhalb des Ventilgehäuses 1 gelagert ist. Zur Lagerung ist eine untere Halbschale 14 vorgesehen, die zusammen mit dem Kartuschendeckel 3 eine Kugellagerung für das Betätigungselement 6 bildet.

Zwischen der unteren Halbschale 14 und dem Gehäusedeckel 3 ist eine umlaufende Dichtung 15 vorgesehen.

Eine Verschwenkung des Betätigungselements um den Mittelpunkt der Lagerung der Kugel 13 führt zu einer Verschiebung der Halterungsscheibe 9 und damit der bewegbaren Steuerscheibe 8 der Ventilsteuerung. Diese Verschiebung steuert den Öffnungs- und Schließvorgang des Ventils.

Figur 1 zeigt die Halterungsscheibe 9 und damit die Steuerscheibe 8 in der offenen Position des Ventils. In dieser Position liegt der in der Figur 1 zu sehende Rand der Halterungsscheibe 9 an der Wand des Gehäuses 1 an.

Wird nun das Ventil geschlossen, so entsteht die in Figur 2 dargestellte Position, bei der die Halterungsscheibe 9 an der gegenüberliegenden Seite an der Innenwand des Gehäuses 1 anliegt. Wird nun das als Hebel ausgebildete Betätigungselement 6 noch etwas weiter im Gegenuhrzeigersinn verschwenkt, so gelangt ein unmittelbar an der Oberfläche der Kugel 13 vorhandener im Querschnitt kreisförmiger Abschnitt 16 des Betätigungselements 6 zur Anlage an dem Rand der Öffnung 4 des Kartuschendeckels 3. Dieser Rand der Öffnung 4 des Kartuschendeckels bildet damit einen Anschlag für das Betätigungselement 6. Das Betätigungselement 6 bildet auf Grund der Lagerung des Kugelabschnitts 13 einen zweiarmigen Hebel, wobei der Anschlag für das Betätigungselement, der von dem Rand der Öffnung 4 gebildet wird, auf der Seite des einen Hebelarms liegt, während der andere Hebelarm an der Steuerscheibe eingreift. Auf Seiten der Steuerscheibe gelangt die Halterungsscheibe 9 zur Anlage an der Innenseite der Außenwand des Gehäuses 1, was ebenfalls einen Anschlag bildet. Dieser Anschlag ist ein Anschlag für die Steuerscheibe 8.

Figur 3 zeigt nun einen Schnitt durch den Abschnitt 16 am Betätigungsschaft 5 mit einer skizzierten Anordnung der Halterungsscheibe 9 und der Innenkontur 17 des Kartuschengehäuses 1. Die Halterungsscheibe 9 ist eine kreisförmige Scheibe, hat also die gleiche Querschnittsform wie der Abschnitt 16 des Betätigungselements 6. Die Innenkontur 17 des Gehäuses 1 im Bereich der der Steuerscheibe zugeordneten Halterungsscheibe 9 ist über den größten Teil als Kreisbogen ausgestaltet, der rechts in Figur 3 durch einen Winkel mit einer abgerundeten Kontur 18 verbunden ist. Der Rand 19 der Öffnung 4 für das Betätigungselement weist etwa die gleiche Form auf, die jedoch spiegelbildlich angeordnet ist. Der abgerundete Winkel ist also links angeordnet, während der bogenförmige Teil rechts angeordnet ist. In der Position der Figur 3 liegt die Halterungsscheibe 9 direkt an der Kontur 17 des Kartuschengehäuses an, während der kreisförmige Abschnitt 16 des Betätigungselements noch einen minimalen Abstand von dem Rand der Öffnung 4 aufweist.

Die Figur 4 zeigt einen gleichen Schnitt diesmal in der Position der Figur 2, wobei jetzt die Halterungsscheibe 9 für die Steuerscheibe 8 ebenfalls an der Innenkontur 17 anliegt, und zwar in der der geschlossenen Position des Ventils entsprechenden Position. Auch der im Querschnitt kreisförmige Abschnitt 16 des Betätigungselements 6 liegt hier mit minimalem Abstand vor der entsprechenden Stelle des Randes der Öffnung 4, so dass bei einer auch nur geringfügigen Weiterbewegung dort ein Anschlag wirksam wird.

Durch das Vorsehen zweier sich gegenseitig unterstützender Anschläge, die auf beiden Seiten des Drehpunkts des zweiarmigen Hebels angeordnet sind, verringern sich die auf das Gehäuse nach außen wirkenden Kräfte, so dass die Lebensdauer der Ventilkartusche, insbesondere ihre Dichtigkeit, vergrößert wird.

Die Innenkontur 17 des Gehäuses im Bereich der Halterungsscheibe 9 und die Innenkontur 19 der Öffnung 4 für das Betätigungselement sind so gewählt, dass die maximale Bewegungsmöglichkeit des Ventils in alle Richtungen von diesen Linien eingeschlossen ist.

## Patentansprüche

1. Mischerkartusche, mit
1.1 einem Kartuschengehäuse (1),
1.2 einer in dem Kartuschengehäuse (1) angeordneten Scheibensteuerung (7, 8),
1.3 einer in dem Kartuschengehäuse (1) angeordneten Lagerung für ein Betätigungselement (6) der Scheibensteuerung (7, 8),
1.4 einer zur Begrenzung mindestens der Schließbewegung der Steuerung bestimmten Anschlageinrichtung, die
1.5 einen Anschlag für die Steuerscheibe (8) oder ein mit dieser verbundenes Element (9), der
1.6 an einer den maximal möglichen Bewegungsweg der Steuerscheibe (8) oder des mit ihr verbundenen Elements (9) einschließenden Innenkontur (17) im Kartuschengehäuse (1) ausgebildet ist, und
1.7 einen Anschlag für das Betätigungselement (6) aufweist, der
1.8 an einer den maximal möglichen Bewegungsweg des Betätigungselements (6) einschließenden Kontur (19) im Kartuschengehäuse (1) ausgebildet ist, wobei
1.9 die Kontur (19) für das Betätigungselement (6) angenähert spiegelbildlich verkleinert zu der Kontur (17) für die Steuerscheibe (8) oder das mit ihr verbundene Element (9) ausgebildet ist.

2. Mischerkartusche nach Anspruch 1, bei der das Betätigungselement (6) als zweiarmiger Hebel ausgebildet ist und der Anschlag für das Betätigungselement (6) mit dem der Steuerscheibe (8) abgewandten Hebelarm zusammenwirkt.

## Claims

1. A mixer cartridge, with
1.1 a cartridge housing (1),
1.2 a cam control (7, 8) disposed inside the cartridge housing (1),
1.3 a mounting disposed inside the cartridge housing (1) for an activating element (6) of the cam control (7, 8),
1.4 a limit device meant for limiting at least the closing movement of the control, which limit device
1.5 features a limit stop for the control cam (8) or for an element (9) connected with the latter, which limit stop
1.6 is formed on an internal contour (17) inside the cartridge housing (1) including the maximum possible movement distance of the control cam (8) or the element (9) which is connected to it, and
1.7 comprises a limit stop for the activating element (6), which limit stop
1.8 is formed on a contour (19) including the maximum possible movement distance of the activating element (6) inside the cartridge housing (1), wherein
1.9 the contour (19) for the activating element (6) is formed approximately as a mirror-image and reduced in size relative to the contour (17) for the control cam (8) or for the element (9) connected with it.

2. The mixer cartridge according to claim 1, in which the activating element (6) is formed as a two-armed lever and the limit stop for the activating element (6) interacts with the lever arm that faces away from the control cam (8).

## Revendications

1. Cartouche pour mitigeur, comprenant
1.1 un corps de cartouche (1),
1.2 une commande à disque (7, 8) agencée dans le corps (1) de cartouche,
1.3 un palier, agencé dans le corps (1) de cartouche, pour un élément (6) servant à actionner la commande (7, 8) à disque,
1.4 un dispositif à butée destiné à limiter au moins le mouvement de fermeture de la commande,
1.5 dispositif qui présente une butée pour le disque de commande (8) ou un élément (9) relié à ce disque, laquelle butée
1.6 est configurée, dans le corps (1) de cartouche, contre un contour intérieur (17) incluant la course de déplacement maximale possible du disque de commande (8) ou de l'élément (9) relié à ce disque, et dispositif qui présente
1.7 une butée pour l'élément d'actionnement (6), laquelle
1.8 est configurée, dans le corps (1) de cartouche, contre un contour (19) incluant la course maximale possible de l'élément (6) d'actionnement, sachant que
1.9 le contour (19) afférent à l'élément (6) d'actionnement est configuré rapetissé approximativement symétrique du contour (17) du disque (8) de commande ou de l'élément (9) relié au disque.

2. Cartouche de mitigeur selon la revendication 1, sur laquelle l'élément (6) d'actionnement est configuré comme levier à deux bras et la butée de l'élément (6) d'actionnement interagit avec le bras de levier regardant en sens opposé au disque (8) de commande.
